# EUROPEAN PATENT SPECIFICATION

(11) **EP 3 815 968 B1**
(45) Date of publication and mention of the grant of the patent: **22.03.2023**
(21) Application number: 20204781.7
(22) Date of filing: 29.10.2020
(51) Int. Cl.: B60N 2/58, A44B 18/00, A47C 31/11

(54) **APPLICATION OF UNIDIRECTIONAL HOOK AND LOOP ATTACHMENT TO AIRCRAFT SEAT UPHOLSTERY APPLICATION**
ANWENDUNG EINES UNIDIREKTIONALEN KLETTVERSCHLUSSES AN EINER FLUGZEUGSITZPOLSTERANWENDUNG
APPLICATION DE CROCHET UNIDIRECTIONNEL ET DE FIXATION DE BOUCLE POUR UNE APPLICATION DE GARNITURE DE SIÈGE D'AÉRONEF

(30) Priority: 29.10.2019 US 201916667524
(43) Date of publication of application: 05.05.2021
(73) Proprietor: B/E Aerospace, Inc., Winston Salem, NC 27105 (US)
(72) Inventor: DOWTY, Mark B., Rural Hall, NC 27045 (US)
(74) Representative: Dehns

(56) References cited:
- WO-A1-2018/226200
- DE-A1- 19 725 194
- DE-U1-202011 002 719
- US-A- 3 318 632
- US-A1- 2012 248 839
- US-A1- 2017 008 435
- US-A1- 2018 235 376
- Unknown: "Velcro Brand Product Line - Amazing connections", , 7 June 2017 (2017-06-07), pages 1-57, XP055778396, Retrieved from the Internet: URL:https://www.velcro.com.au/wp-content/u ploads/sites/30/2017/12/VELCRO%C2%AE-BRAND -CATALOGUE-LR.pdf [retrieved on 2021-02-22]

## Description

### BACKGROUND

Aircraft seat cushions and aircraft seat covers for passenger seats are used extensively onboard aircraft. The cushions and seat covers provide physical comfort for the passenger, are often designed to be pleasing to the eye of the passenger, and create a relaxing ambience while the passenger is on board the aircraft.

Passenger seats may have one or more layers of seat cushion and covers. For instance, a seat cushion may be attached to a seat frame, and the seat cover may then be attached to the seat cushion. Alternatively, the seat cover and seat cushion may be designed as one piece, which is then attached to the seat frame.

Seat covers are often attached using technologies that allow the seat cover to be easily removed for cleaning or replacing. Types of attachment devices used for temporarily attaching seat covers include snap fasteners (e.g., press studs), hook and loops fasteners, hook and eye fasteners, and magnets. Once a seat cover is attached to a seat using these attachment devices, the capability of the cover seat to be adjusted upon the seat is greatly reduced. This is often problematic when there is an adjustment needed for the seat cover, such as to remove a wrinkle or to reposition the seat cover. Additionally, these attachment devices often engage prematurely, attaching the seat cover to the seat in an incorrect orientation, requiring removal and/or repositioning. The repositioning process can add to the time required to properly attach the seat cover and can be frustrating to the operator. US 3,318,632 and US2017/0008435 A1 disclose aircraft seat covers.

### SUMMARY

A system for attaching a seat cover to at least one of a seat, seat cushion, or seat frame is provided as defined by claim 1.

In some embodiments of the system, the first part of the hook and loop fastener structure further includes a plurality of hooks. The plurality of hooks is configured to align in a single direction. The second part of the hook and loop fastener includes a plurality of loops. The plurality of loops is configured to attach to at least a portion of the plurality of hooks.

In some embodiments of the system, the second part of the hook and loop fastener structure further includes a plurality of hooks. The plurality of hooks is configured to align in a single direction. The first part of the hook and loop fastener further includes a plurality of loops. The plurality of loops is configured to attach to at least a portion of the plurality of hooks.

A method for attaching a seat cover to at least one of a seat, seat cushion, or seat frame is also provided as defined by claim 8.

In some embodiments of the method, the method may further include at least one of adjusting the seat cover or pressing the seat cover against the seat, seat cushion, and/or seat frame.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is a diagram illustrating components of a unidirectional hook-and-loop fastener, in accordance with one or more embodiments of this disclosure.
FIG. 1B is a diagram illustrating a hook-and-loop fastener in a fastened configuration, in accordance with one or more embodiments of this disclosure.
FIG. 2A is a diagram illustrating a component of a hook-and-loop fastener attached to a seat backrest, in accordance with one or more embodiments of this disclosure.
FIG. 2B is a diagram illustrating a component of a hook-and-loop fastener attached to a seat cover, in accordance with one or more embodiments of this disclosure.
FIG. 3A is a diagram illustrating a seat cover slipping over a seat backrest, in accordance with one or more embodiments of this disclosure.
FIG. 3B is a diagram illustrating seat cover covering a seat backrest, in accordance with one or more embodiments of this disclosure.
FIG. 4A is a diagram illustrating a panel and panel bracket with components of a unidirectional hook-and-loop fastener, in accordance with one or more embodiments of this disclosure.
FIG. 4B is a diagram illustrating an insertion of a panel into a panel bracket utilizing components of a unidirectional hook-and-loop fastener, in accordance with one or more embodiments of this disclosure.
FIG. 4C is a diagram illustrating a panel securely inserted into a panel bracket utilizing components of a unidirectional hook-and-loop fastener, in accordance with one or more embodiment of this disclosure.
FIG. 5 is a process flow diagram of a method of attaching a seat cover to an at least one of a seat, seat cushion, or seat frame, in accordance with one or more embodiments of this disclosure,

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

Broadly, embodiments of the present disclosure are directed to a system and apparatus for attaching a seat cover to a seat frame. More particularly, embodiments of the present disclosure are directed to a system an apparatus for using unidirectional hook-and-loop fasteners to attach a seat cover to a seat frame.

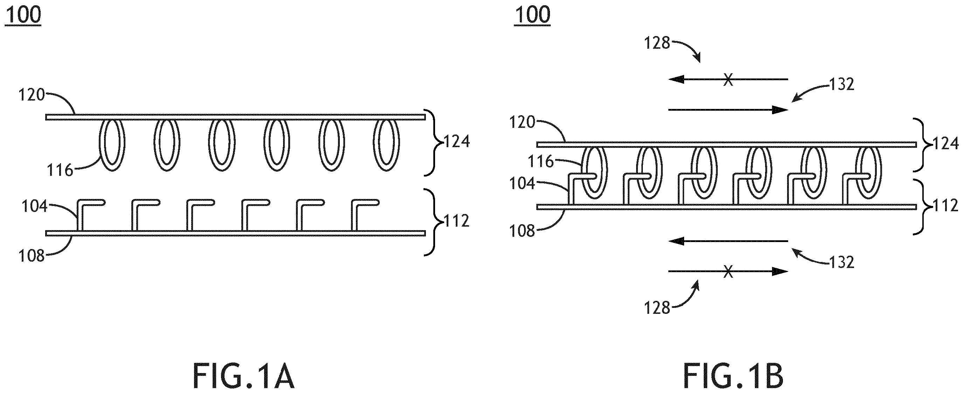

FIG.1A and 1B illustrates a unidirectional hook and loop fastener structure 100, in accordance with one or more embodiments of the present disclosure. The hook and loop fastener structure 100 is composed of two parts. The first part of the hook and loop fastener structure 100 is referred to as the hook-side component 112. The hook-side component 112 is comprised of a plurality of hooks 104 attached to a first backing layer 108. The second part of the hook and loop fastener structure 100 is referred to as the loop-side component 124. The loop-side component 124 is comprised of a plurality of loops 116 attached to a second backing layer 120. The hook-side component 112 and loop-side component 124 are intended to attach to each other (e.g., at an interface) in a manner similar to the commercially available product, Velcro ^{®}.

The first backing layer 108 and second backing layer 120 may be formed of any material known in the art to be used as a hook and loop fastener structure 100, including but not limited to fabric (e.g., cotton, polyester, and aramid fabrics), plastic (e.g., polypropylene), rubber, metal. The first backing layer 108 and second backing layer 120 may be formed of similar materials. Alternatively, the first backing layer 108 and second backing layer 120 may be formed of different materials.

The hooks 104 and loops 116 may be formed of any material known in the art for making hooks 104 and loops 116 for hook and loop fastener structures 100, including but not limited to plastic (e.g., nylon, polyester), rubber, or metal. The hooks 104 and loops 116 may be attached to the first backing layer 108 or second backing layer 120 by any method known in the art for attachment, including but not limited to using adhesives, stamping, and weaving.

The distribution of the hooks 104 and loops 116 on the first backing layer 108 and second backing layer 120, respectively, may be of any distribution known in the art for placing hooks 104 and loops 116 on a backing layer of a hook and loop fastener structure 100. For instance, the hooks 104 and loops 116 may be arranged randomly. In another instance, the hooks 104 and loops 116 may be arranged in an arrayed pattern. The hooks 104 and loops 116 may have similar distributions on their respective backing layers. Alternatively, the hooks and loops may have non-similar distributions on their respective backing layers.

The orientation of the loops 116 on the second backing layer 120 may be of any orientation known on the art for orientating loops 116 in a hook and loop fastener structure 100. For instance, the loops 116 may be oriented randomly along a vertical axis relative to the second backing layer 120. In another instance, the loops 116 may be oriented in a single orientation, as in FIG. 1A. In still another instance, the loops 116 may be oriented in a set of orientations (e.g., two orientations perpendicular to each other) along a vertical axis relative to the second backing layer 120.

The orientation of the hooks on the first backing layer 108 may be oriented in a substantially single direction (e.g., unidirectional) along the first backing layer 108, as shown in FIG. 1A. Figure 1B illustrates the how the hook and loop fastener structure 100 operates using hooks 104 arranged unidirectionally. When the unidirectional hooks 104 hook into the loops 116, the hook-side 112 and loop-side 124 of the hook and loop fastener structure 100 are bound together. In this bound configuration, forces from different directions have different effects on the hook and loop fastener structure 100. If either hook-side 112 or loop-side component 124s of the hook and loop fastener structure 100 are pulled in an engaging direction 128 so that the loops 116 are pulled further into the hooks 104, the hook and loop fastener structure 100 holds tight. If either hook-side 112 or loop-side component 124s of the hook and loop fastener structure 100 are pulled in a disengaging direction 132 so that the loops 116 are pulled away from hooks 104, the hook and loop fastener structure 100 releases. This type of hook-and-loop fastener is currently available commercially (e.g., Velcro^{®} HTH-719). It should be noted that the loops 116 of the loop-side component 124 are typically randomly oriented along the backing (e.g., the orientation of the hooks 104 on the hook-side structure determine the directionality of the hook and loop structure).

A unidirectional hook and loop fastener structure 100 has binding characteristics that are different than traditional hook-and-loop fasteners. For instance, the hook-side 112 and loop-side component 124 of the unidirectional hook and loop fastener structure 100 can slide against each other as long as the hooks are not oriented to insert themselves into the loops 116. However, if the sliding motion changes so that the hooks 104 are oriented to insert into the loops 166, the hook and loop fastener structure 100 will immediately fasten. To unfasten the hook and loop fastener structure 100 at this point, the hook-side 112 and loop-side component 124s must be pulled into the initial sliding direction, or be pulled apart in opposite directions. It should be noted that the components of the unidirectional hoop and loop fastener structure 100 will attach to each other with some affinity regardless of the orientation of the hooks 104, and that the affinity increases with increasing numbers of hook-loop interactions.

It should be known that the ability of the components of the unidirectional hook and loop fastener structure 100 to slide upon each other is relative to the general orientation of the hooks 104 to the loops 116. The components of the hook and loop fastener structure 100 are the most resistive to sliding when the sliding direction orients the hooks 104 into the loops 116 (e.g., a first direction), and are the least resistive to sliding when the sliding direction orients the hooks 104 out of, and away from, the loops 116 (e.g., a second direction). Sliding forces from alternative directions (e.g., sliding of the hooks in a perpendicular direction where the loops 116 are forced against the side of the hooks 104) will require an intermediate amount of force, based on the ability of hooks 104 to insert into loops 116 during movement. Therefore, the terms "first direction" and "second direction" refer to the general sliding directions of the components of the hook and loop fastener structure 100 that are more resistant, or less resistant, to sliding motion, respectively.

The hook-side component 112 and the loop-side component 124 may be installed so that the two components are parallel to each other when the seat cover 210 is attached to the seat backrest 210 (e.g., the hooks 104 are aligned to fasten to the loops 116). However, the alignment of the hook-side component to the loop-side component may be configured to be an alignment other than parallel. For instance, the alignment of the hook-side component 112 to the loop-side component may be altered so that one component is rotated 20 degrees off of parallel. In another instance, the alignment of the hook-side component 112 to the loop-side component may be altered so that one component is rotated 90 degrees off of parallel. In still another instance, the alignment of the hook-side component 112 to the loop-side component may be altered so that one component is rotated five degrees off of parallel. Therefore, the above description should not be interpreted as a limitation of the present disclosure, but merely as an illustration.

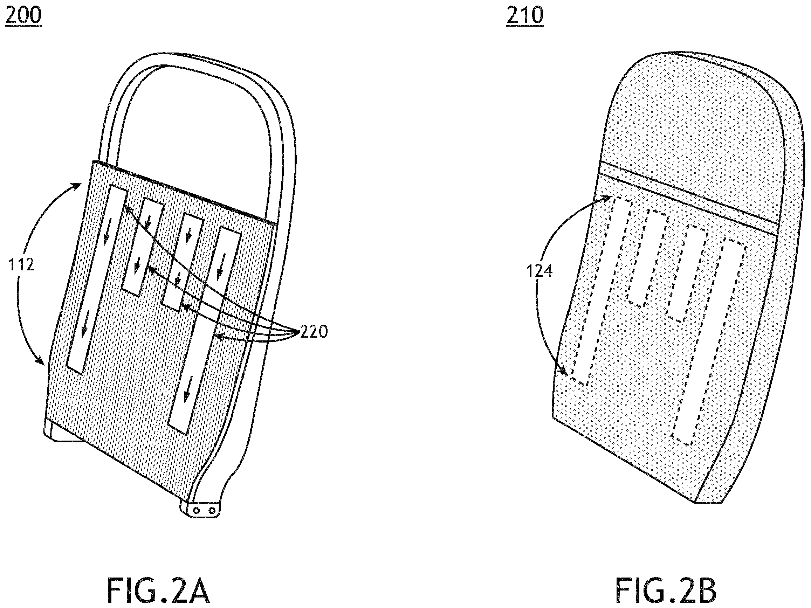

FIGS. 2A to 3B illustrate the use of unidirectional hook-and-loop technology on attaching a seat cover 210 to a seat backrest 200. It should be noted that the seat cover may cover any component of a seat capable of being covered by a seat cover, including but not limited to a seat backrest 200 (e.g. seat back), headrest, seat base, arm rest, leg rest, or backside portion of the at least one of a seat, seat cushion, or seat frame. Therefore, the description herein should not be interpreted as limiting.

FIG. 2A is a diagram illustrating a hook-side component of a hook and loop fastener structure 100 attached to a seat backrest 200, in accordance with one or more embodiments of this disclosure. The seat backrest 200 provides back support for passengers as they sit in a passenger seat. The seat backrest 200 may be of any size or shape known in the art to be used as a seat backrest 200. For instance, the seat backrest 200 may be one typically used on board an aircraft, as in FIG. 2A. In another instance, the seat backrest 200 may be one typically used on a bus, boat, or any other vehicle. In still another instance, the seat backrest 200 may be any type of backrest used on a chair, recliner, barstool, or any other apparatus used for sitting.

The component of the hook and loop fastener structure 100 that is attached to the seat backrest 200 may be either the hook-side component 112 (e.g., as in FIG 2A) or loop-side component 124, as long as the component is paired with a complement of the component (e.g., the hook and loop fastener structure 100 must include a hook-side 112 and loop-side 124 pair). The component of the hook and loop fastener structure 100 may be attached to the seat backrest 200 by any means known in the art to attach a hook and loop fastener structure 100 to a backing layer, including but not limited to sewing, gluing, and heating (e.g., iron on). The component of the hook and loop fastener structure 100 attached to the seat backrest 200 may be arranged in any configuration that allow the seat cover 210 to attach to the seat backrest 200. For instance, the hook and loop fastener structure 100 may be arranged series of parallel, or near parallel strips, as in FIG. 2A. In another instance, the hook and loop fastener structure may be arranged in a crisscross orientation. In still another instance, the hook and loop fastener structure 100 may be arranged in the shape of a square. Therefore, the above description should not be interpreted as a limitation of the present disclosure, but merely as an illustration.

FIG 2B is a diagram illustrating a loop-side component 124 of a hook and loop fastener structure 100 attached to a seat cover 210 configured to fit over a seat backrest 200. The seat cover 210 may be configured to cover, protect, and/or provide an aesthetic appearance for a seat backrest 200. Similar to the seat backrest 200 described above, the component of the hook and loop fastener structure 100 that is attached to the seat cover 210 may be either the hook-side 114 component or loop-side component 124 (as in FIG. 2B), as long as the component is paired with a complement of the component.

The hook-side 112 and/or loop-side component 124 of the hook and loop fastener structure 100 is attached to the seat cover 210 by any means known in the art to attach a hook and loop fastener structure 100 to a seat cover 210, including but not limited to sewing, gluing, and heating (e.g., iron on). The component of the hook and loop fastener structure 100 attached to the seat cover 210 may be arranged in any configuration that allow the seat cover 210 to attach to the seat backrest 200. For instance, the hook and loop fastener structure 100 may be arranged in an series of parallel, or near parallel, strips, as in FIG. 2B. In another instance, the hook and loop fastener structure 100 may be arranged in the shape of a square. In some embodiments, the pattern of the hook-and-loop component on the seat backrest 200 matches the pattern of the hook-and-loop component on the seat cover 210. In some embodiments the patterns of the two hook-and-loop components on the seat backrest 200 and seat cover 210 do not match (e.g., one component may be a few strips, while the other component is a solid sheet).

It should be understood that a seat may include several layers, each of which may use hook and loop fastener structure 100 technology. For instance, a seat may include a seat frame and seat cover 210. In another instance, the seat may include a seat frame, a cushion layer, and a seat cover 210. In another instance, the seat may include a seat frame and a seat cover 210 with a cushion layer embedded within the seat cover 210. In still another instance, the seat cover 210 may be designed to fit over another seat cover 210 (e.g., the seat cover fits over a fully functional seat). The seat may also contain other layers that add functionality to the seat (e.g., stability, temperature control, or fireproofing). One or more layers of the seat may be attached to another layer of the seat by a unidirectional hook and loop fastener structure 100. Therefore, the description herein should not be interpreted as a limitation or the present disclosure, but merely as an illustration.

In some embodiments, the unidirectional hook and loop fastener structure 100 is oriented so that the hook-side component 112 and loop-side component 124 of the hook and loop fastener structure 100 do not engage when the seat cover is slid over the component of the seat to be covered. FIG. 2A illustrates the orientation of the hooks 104 of the hook-side component 112 of the hook and loop fastener structure 100 as attached to the seat back-rest 200. The hooks 104 are oriented to point downwards towards the bottom of the seat backrest 200 (as indicated by arrows 220).

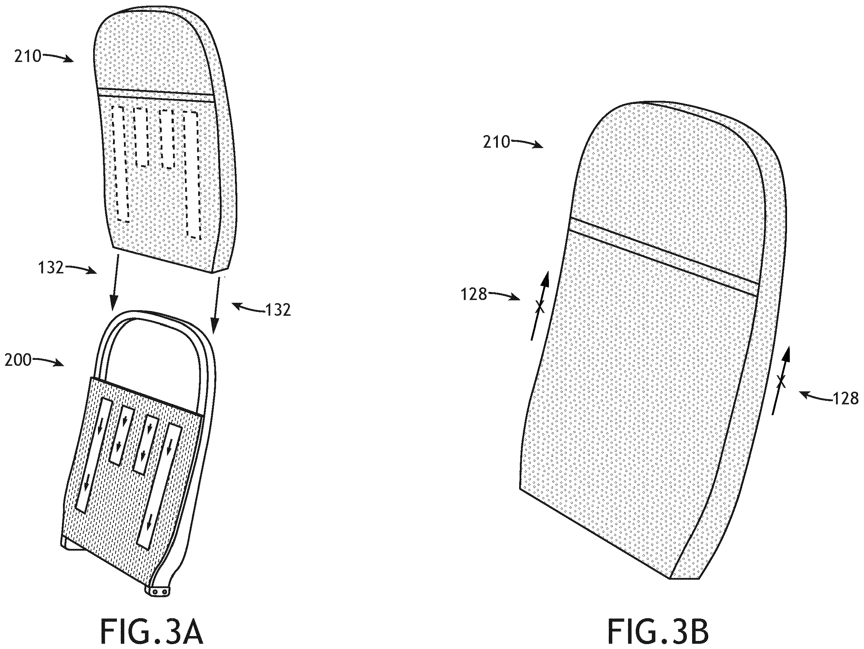

FIG. 3A and 3B illustrate the attachment of the seat cover 210 to the seat backrest 200 using unidirectional hook and loop fastener structures 100 oriented in a single direction. Because the ends of the hooks 104 of the hook-side component 112 of the hook and loop fastener structure 100 are facing downward, the hook-and-loop fastener does not engage when the seat cover slides over the seat backrest 200. Once the seat cover 210 is slid into the proper orientation upon the seat backrest 200, a slight pressure of the hook-side component 112 against the loop-side component 124 of the hook and loop fastener structure 100 and/or a slight tug of the seat cover 210 to slide the seat cover 210 upwards relative to the seat backrest 200 will engage the hook and loop fastener structure 100, and the seat cover 210 will hold fast to the seat backrest 200. Removal of the seat cover 210 from the seat backrest 200 may require a coordinated pulling apart of the seat cover 210 from the seat backrest 200 to disengage the hook and loop fastener structure 100 and pulling upward of the seat cover 210 from the seat backrest 200. In other words, the alignment of the plurality of hooks 104 permit the sliding of the seat cover 210 onto the seat backrest 200 and resist the sliding of the seat cover 210 off the seat backrest 200. The unidirectional hook and loop fastener structure 100 allows the seat cover to be easily pulled over and attached to the seat without the fasteners prematurely engaging, and further allows the repositioning (e.g., sliding) of the seat cover, such as for the purpose of removing wrinkles.

It should be noted that the sliding direction of the seat cover 200 should not be limited to the example illustrated in FIG. 3 (e.g., sliding the cover seat 200 downward over a seat backrest 210). For instance, a cover for a seat base, arm rest, and or leg rest may be slid laterally (e.g., not downward) to cover the seat component. A cover may also be slid upwards to cover a seat component. Therefore, the above description should not be interpreted as a limitation, but merely as an illustration.

It should also be noted that the orientation of the hooks 104 of the unidirectional hook and loop fastener structure 100 should not limited to the example illustrated in FIG. 3 (e.g., facing downward, away from the sliding direction of the seat cover 200). For instance, the hooks 104 of the hook and loop fastener structure 100 may be oriented towards the sliding direction of the seat cover. This would create a component that is easier to slide off than to slide on (e.g., a children's seat cover that would require frequent washing). The orientation of the hooks 104 may also be oriented based on safety or mechanical concerns, rather than ease of implementation. For instance, a cushion may be attached to a seat bed with unidirectional hook and loop fastener structures 100 oriented to prevent the cushion from sliding off of the seat in case of an abrupt stop or reduction in speed.

The unidirectional hook and loop fastener structure 100 may also be oriented in more than one direction (e.g., multiple sections of the unidirectional hook and loop fastener structure 100, with hooks 104 of each section aligned in a single direction, are themselves aligned in different directions). For instance, one hook-side component 112 with hooks oriented towards the top of a seat backrest may be attached to the top of the seat backrest, and one hook-side component 112 with hooks oriented towards the bottom of the seat backrest may be attached to the bottom to the seat backrest. By attaching loop-side components 124 in the corresponding areas on the interior side of the seat cover 210 and sliding the seat cover 210 over the seat backrest 200, the hook-side components 112 and the loop-side components 124 will engage. The seat cover may be further pulled taut by sliding the top and bottom ends of the seat cover 210 away from each other, with the action of the opposing unidirectional hook and loop fastener structures 100 adhering to the stretched fabric, resulting in a more aesthetically pleasing surface free of wrinkles. Strategies to stretch and hold material in this manner may require many different orientations and number of unidirectional hook and loop fastener structures 100. For instance, the unidirectional hook and loop fastener structures may be oriented in a circle, with the hooks 104 of the hook-side components 112 all facing outward. In another instance, the unidirectional hook and loop fastener structures may be oriented in a square, with the hooks 104 of the hook-side components 112 all facing outward. Many other combinations are possible. Therefore, the above description should not be interpreted as a limitation of the present disclosure, but merely as an illustration

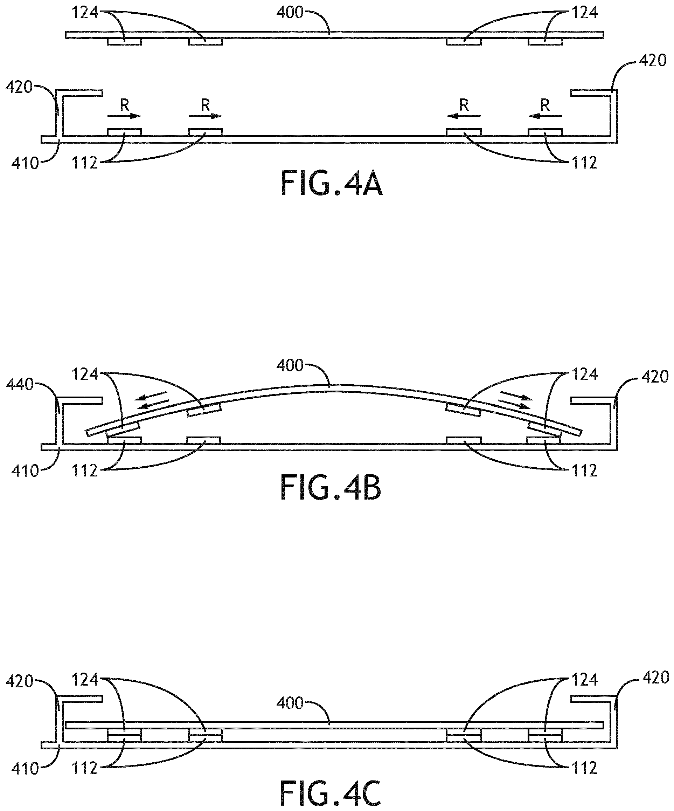

The unidirectional hook and loop fastener structure 100 may also be used for other passenger chair or cabin components that would benefit from easy-on or easy-off applications. For example, the unidirectional hook and loop fastener structure 100 may be used to adhere a panel to a closeout on the passenger seat (e.g., such as an opening that allows technicians access to a seat-recline mechanism). FIGS 4A-4C illustrate an insertion of a panel 400 into a panel bracket 410 utilizing components of a unidirectional hook-and-loop fastener structure 100, in accordance with one or more embodiments of this disclosure. In embodiments, the hook-side component 112 of the unidirectional hook and loop fastener structure 100 is adhered to the panel bracket 410. The panel bracket 410 may further include one or more channels 420. The channels 420 allow the panel 400 to fit within the panel bracket 410. In embodiments, the loop-side components 124 of the unidirectional hook and loop fastener structure 100 are adhered to the panel 400. To insert the panel 400 into the panel bracket 410, the panel is bowed slightly before inserting the edges of the panel 400 within the channels 420 of the panel bracket 410 (e.g., as in FIG. 4B). The panel 400 is simultaneously pushed up against the panel bracket 410 so that the components of the unidirectional hook-and-loop fastener structure 100 come into contact. The hook-side components 112 are aligned so that when the panel unflexes from the bowed configuration, the components of the unidirectional hook-and-loop fastener structure 100 will slide against each other with relatively little resistance. The hook-side components 112 are further aligned to resist the sliding that would occur between the components of the hook-and-loop fastener structure 100 if the panel 410 is bowed for removal (e.g., the direction of resistance "R" as shown in FIG. 4A). The unidirectional hook-and-loop fastener structure 100 facilitates a stable attachment between the panel 400 and panel bracket 410 (e.g., FIG 3C) that is easy to employ and resists removal.

In some embodiments, the unidirectional hook and loop fastener 100 may be oriented to prevent movement of objects during unintended aircraft movement such as turbulence or hard braking upon landing. For example, the unidirectional hook and loop fastener structure 100 may be used to attach a cushion to a seat frame so that the cushion will resist sliding off of the seat frame during a hard-braking procedure upon landing.

In some embodiments, the hook-side component 112 of the hook and loop fastener structure 100 will be labeled, marked and/or otherwise modified to indicate the which direction the hooks 104 are pointing, as the hooks are small and difficult to see with the naked eye. The labeling, marking, or modifying of the hook-side component 112 may include any type of modification known in the art for modifying a hook and loop fastener structure 100, including but not limited to the use of color, size, numbers, letters, symbols, shapes, or any other descriptive element. For instance, the hook-side component 112 may be labeled with arrows 200 to indicate hook 104 orientation. In another instance, the hook-side component 112s may be cut to form arrow-like shapes that indicate hook 104 orientation. In another instance, an indicator of orientation may be sewn into the hook-side component 112. In another instance, a number, or the orientation of a number, may indicate the orientation of the hooks 104. In still another instance, the hook-side component 112 strip may have two colors (e.g., black and white) marking a respective side of the strip parallel to each other, wherein the black side of the hook-side component strip indicates the direction that the hooks 104 are oriented.

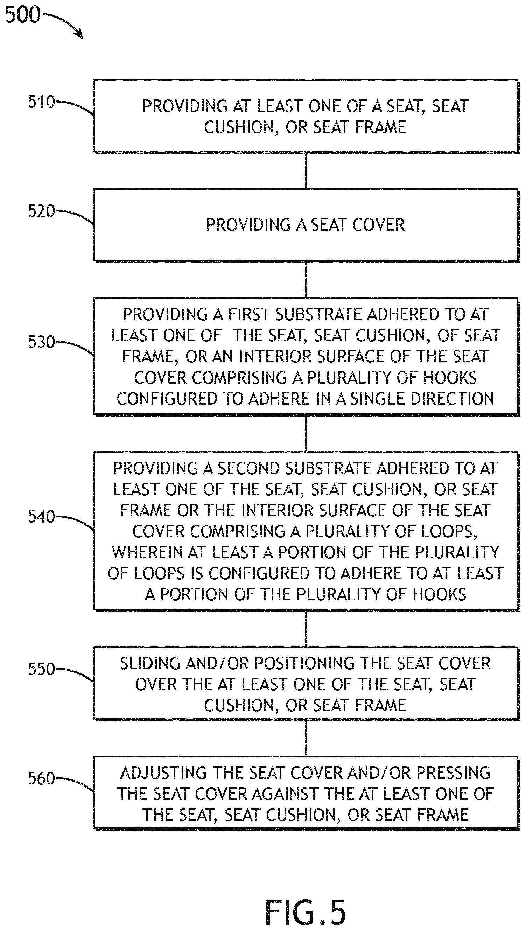

FIG. 5 is a process flow diagram of a method 500 of attaching a seat cover 210 to an at least one of a seat, seat cushion, or seat frame, in accordance with one or more embodiments of this disclosure. The method 500 includes a step 510 of providing at least one of a seat, seat cushion, or seat frame. The seat, seat cushion, and/or seat frame may include any sea, seat cushion, and/or seat frame known in the art for sitting by a person. For instance, the seat, seat cushion, and/or seat frame may be a portion of, or an entirety of, a passenger seat. In another instance, the seat, seat cushion, and/or seat frame may be a portion of, or an entirety of, an aircraft seat.

The method 500 further includes a step 520 of providing a seat cover 210. As described herein, the seat cover 210 may be of any size, shape and/or material used to cover a portion of, or an entirety of, a seat, seat cushion, and/or seat frame. The method 500 further includes a step 530 of providing a first backing layer 108 attached to at least one of the seat, seat cushion, or seat frame, or an interior surface of the seat cover comprising a plurality of hooks 104 configured to attach in a single direction. The hook-side component 112 of the hook and loop fastener structure 100 may be attached to the interior surface of the seat cover 210 or the seat, seat cushion, and or seat frame, depending on the needs of the user. For instance, the hook-side component 112 of the hook and loop fastener structure 100 may be attached to the interior surface of the seat cover 210. In another instance, the hook-side component 112 of the hook and loop fastener structure 100 may be attached to the surface of the seat, seat cushion, or seat frame. In still another instance, the hook-side component 112 of the seat cover may be attached to both the interior surface of the seat cover 210 and the seat, seat cushion, or seat frame (e.g., each component matches as a complement pair). It should be noted that the interior surface of the seat cover 210 is the side of the seat cover 210 facing the seat, seat cushion, or seat frame.

The method 500 further includes a step 540 of providing a second backing layer 120 attached to the at least one of the seat, seat cushion, or seat frame, or the interior surface of the seat cover 210 comprising a plurality of loops 116, wherein the plurality of loops 116 is configured to attach to a least a portion of the plurality of hooks 104. The loop-side component 124 of the hook and loop fastener structure 100 may be attached to the seat cushion or seat frame, depending on the needs of the user. For instance, the loop-side 112 of the hook-and-loop fastener may be attached to the interior surface of the cover. In another instance, the loop-side of the hook-and-loop fastener may be attached to the surface of the seat, seat cushion, or seat frame. In still another instance, the loop-side 124 of the seat cover may be attached to both the interior surface of the seat cover and the seat, seat cushion, or seat frame (e.g., the loop-side is arranged to match with the hook-side attached to the other seat component.

The method 500 further includes a step 550 of sliding and/or positioning the seat cover over the at least one of the seat, seat cover, or seat frame. In the method 500, the orientation of the hooks 104 in the hook-side component 112 of the hook and loop fastener structure 100 may be oriented so that the hooks 104 are facing the same direction as the motion of the seat cover 210 relative to the seat, as seen in FIG. 3A (e.g., the hooks 104 face downward as the seat cover 210 is slid downward over the seat backrest 200). The orientation of the hooks 104 in the same direction as the motion of the seat cover 210 reduces the interaction of the hooks 104 with the loops 116, allowing the seat cover 210 to slip on easily.

The next step 560 of the method 500 includes adjusting the seat cover 210 and/or pressing the seat cover 210 against the seat, seat cushion, and/or seat frame. Once the unidirectional hook and loop fastener structures 100 has been slid or placed into the approximate position required, the seat cover 200 may still be adjusted. For instance, if the seat cover 210 is slid over the seat backrest 200 of an aircraft passenger seat, and the seat cover 210 is found to have an improper position (e.g., horizontally misaligned, not slid on far enough, or has a wrinkled appearance), the user may adjust the seat cover by pulling the seat cover in the direction needed. The user may pull or adjust the seat cover in any direction where the unidirectional hook and loop fastener structure 100 does not substantially restrict movement (e.g., in a direction where the plurality of hooks do not engage with the plurality of loops).

Unidirectional hook and loop fastener structures 100 were initially designed for applications that required a reduction of noise (e.g., stealth military operations), as the pulling apart of nondirectional hook and loop fastener structures is relatively loud. An example use of unidirectional hook and loop fastener structures 100 as a silent form of attachment technology is its use on security flaps for pouches (e.g., such as the security flap on a cell phone pouch), where one component (e.g., the hook-side) is attached to the flap of the pouch, and the other component (e.g., the loop-side) is attached to the side of the pouch. Upon contact, the hook-side and loop-side components will immediately bind. If the hooks 104 of the hook-side component 112 are oriented so that the tension of the flap over the pouch opening will draw the hooks 104 further into the loops 116 of the loop-side component 124, the flap will hold secure. However, a tug on the flap in the opposite direction will release the hooks 104 from the loops 116, and allow the flap to be removed stealthily.

In the embodiments of this disclosure, a discovered ability of unidirectional hook and loop fastener structures 100 to slide against each other in specific directions without engaging was used to create a system where a seat cover 210 may be oriented into place without prematurely attaching the components of the hook and loop fastener structures 100, a common occurrence in nondirectional hook and loop fastener structures. The embodiments do not intentionally make use of the 'silent' aspect of the unidirectional hook and loop fastener 100. For instance, the removal of a tight-fitting seat cover 210 from a frame utilizing unidirectional hook and loop fastener structures 100 may not allow the user to tug and lift away the hook-side component 112 from the loop-side 124 component as easily as you would for a flap securing a pouch. In this case, the only way to remove the seat cover 210 is to physically force the hook-side 112 and loop-side 124 components away from each other, similar as what is done for nondirectional hook and loop fastener structures, creating significant noise.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps.

Any dimensions, degrees, and/or numerical ranges provided herein are to be understood as non-limiting examples unless otherwise specified in the claims.

## Claims

1. A system for attaching passenger seat coverings comprising:
a seat cover (210);
at least one of a seat, a seat cushion, or a seat frame; and
a hook and loop fastener structure (100), comprising:
a first part (112) of the hook and loop fastener structure attached to the at least one of the seat, the seat cushion, or the seat frame;
a second part (124) of the hook and loop fastener structure attached to the interior surface of the seat cover; and
an interface between the first part of the hook and loop fastener structure and the second part of the hook and loop fastener structure, wherein a portion of the interface is configured to restrict sliding of the first part of the hook and loop fastener structure against the second part of the hook and loop fastener structure in a first direction, while permitting sliding of the first part of the hook and loop fastener structure against the second part of the hook and loop fastener structure in a second direction; and **characterized in that** the first part of the hook and loop fastener structure further comprises an at least one of a color, number, letter or symbol indicating an alignment of the plurality of hooks.

2. The system of claim 1, wherein the first part of the hook and loop fastener structure further comprises a plurality of hooks (104) configured to align in a single direction, wherein the second part of the hook and loop fastener structure further comprises a plurality of loops (116), wherein a portion of the plurality of loops is configured to attach to at least a portion of the plurality of hooks.

3. The system of claim 1, wherein the second part of the hook and loop fastener structure further comprises a plurality of hooks (104) configured to align in a single direction, wherein the first part of the hook and loop fastener structure further comprises a plurality of loops, wherein a portion of the plurality of loops is configured to attach to at least a portion of the plurality of hooks.

4. The system of any preceding claim, wherein an alignment of the plurality of hooks (104) is further configured to permit the sliding of the seat cover onto the at least one of the seat, the seat cushion, or the seat frame and resist the sliding of the seat cover off of the at least one of the seat, the seat cushion, or the seat frame.

5. The system of any preceding claim, wherein the seat cover (210) is further configured to cover at least one of a backrest (200), headrest, seat base, arm rest, leg rest, or backside portion of the at least one of the seat, the seat cushion, or the seat frame.

6. The system of any preceding claim, further comprising a panel (400), wherein the panel attaches via the hook and loop fastener structure to the seat, the seat frame, the seat cushion, or a cabin structure.

7. The system of any preceding claim, wherein the at least one of the seat, the seat cushion, or the seat frame is for use in an aircraft.

8. A method for attaching passenger seat coverings in an aircraft comprising:
providing at least one of a seat, a seat cushion, or a seat frame;
providing a seat cover (210);
providing a first part (112) of a hook and loop fastener structure (100) attached to the at least one of the seat, the seat cushion, or the seat frame
providing a second part (124) of the hook and loop fastener structure attached to the interior surface of the seat cover;
providing an interface between the first part of the hook and loop fastener structure and the second part of the hook and loop fastener structure, wherein a portion of the interface is configured to restrict sliding of the first part of the hook and loop fastener structure against the second part of the hook and loop fastener in a first direction, while permitting sliding of the first part of the hook and loop fastener structure against the second part of the hook and loop fastener structure in a second direction; and
at least one of sliding or positioning the seat cover over the at least one of the seat, the seat cushion, or the seat frame; and **characterized in that** the first part of a hook and loop fastener structure further comprises at least one of a color, number, letter or symbol indicating an alignment of the plurality of hooks.

9. The method of claim 8, wherein the first part of the hook and loop fastener structure comprises a plurality of hooks (104) configured to align in a single direction, wherein the second part of the hook and loop fastener structure comprises a plurality of loops (116), wherein a portion of the plurality of loops is configured to attach to at least a portion of the plurality of hooks.

10. The system of claim 8, wherein the first part of the hook and loop fastener structure comprises a plurality of loops, wherein at least a portion of the plurality of loops is configured to attach to at least a portion of the plurality of hooks, wherein the second part of the hook and loop fastener comprises a plurality of hooks configured to align in a single direction.

11. The method of claim 8, wherein an alignment of the plurality of hooks are further configured to permit the sliding of the seat cover onto the at least one of the seat, the seat cushion, or the seat frame and resist the sliding of the seat cover off of the at least one of the seat, the seat cushion, or the seat frame.

12. The method of claim 8, wherein the seat cover is further configured to cover at least one of a backrest, a headrest, a seat base, an arm rest, a leg rest, or a backside portion of the at least one of the seat, the seat cushion, or the seat frame.

13. The method of claim 8, further comprising at least one of adjusting the seat cover or pressing the seat cover against the at least one of the seat, the seat cushion, or the seat frame.

## Patentansprüche

1. System zum Anbringen von Passagiersitzverkleidungen, Folgendes umfassend:
einen Sitzbezug (210);
mindestens eines von einem Sitz, einem Sitzkissen oder einem Sitzgestell; und
eine Klettverschlussstruktur (100), die Folgendes umfasst:
einen ersten Teil (112) der Klettverschlussstruktur, der an dem mindestens einen von dem Sitz, dem Sitzkissen oder dem Sitzgestell angebracht ist;
einen zweiten Teil (124) der Klettverschlussstruktur, der an der inneren Oberfläche des Sitzbezugs angebracht ist; und
eine Grenzfläche zwischen dem ersten Teil der Klettverschlussstruktur und dem zweiten Teil der Klettverschlussstruktur, wobei ein Abschnitt der Grenzfläche dazu konfiguriert ist, ein Gleiten des ersten Teils der Klettverschlussstruktur gegen den zweiten Teil der Klettverschlussstruktur in einer ersten Richtung einzuschränken, während ein Gleiten des ersten Teils der Klettverschlussstruktur gegen den zweiten Teil der Klettverschlussstruktur in einer zweiten Richtung ermöglicht wird; und **dadurch gekennzeichnet, dass** der erste Teil der Klettverschlussstruktur ferner mindestens eines von einer Farbe, einer Zahl, einem Buchstaben oder einem Symbol umfasst, das eine Ausrichtung der Vielzahl von Haken angibt.

2. System nach Anspruch 1, wobei der erste Teil der Klettverschlussstruktur ferner eine Vielzahl von Haken (104) umfasst, die dazu konfiguriert ist, in einer einzigen Richtung ausgerichtet zu sein, wobei der zweite Teil der Klettverschlussstruktur ferner eine Vielzahl von Schlaufen (116) umfasst, wobei ein Abschnitt der Vielzahl von Schlaufen dazu konfiguriert ist, an mindestens einem Abschnitt der Vielzahl von Haken angebracht zu werden.

3. System nach Anspruch 1, wobei der zweite Teil der Klettverschlussstruktur ferner eine Vielzahl von Haken (104) umfasst, die dazu konfiguriert ist, in einer einzigen Richtung ausgerichtet zu sein, wobei der erste Teil der Klettverschlussstruktur ferner eine Vielzahl von Schlaufen umfasst, wobei ein Abschnitt der Vielzahl von Schlaufen dazu konfiguriert ist, an mindestens einem Abschnitt der Vielzahl von Haken angebracht zu werden.

4. System nach einem vorhergehenden Anspruch, wobei eine Ausrichtung der Vielzahl von Haken (104) ferner dazu konfiguriert ist, das Gleiten des Sitzbezugs auf das mindestens eine von dem Sitz, dem Sitzkissen oder dem Sitzgestell zu ermöglichen und dem Gleiten des Sitzbezugs von dem mindestens einen von dem Sitz, dem Sitzpolster oder dem Sitzgestell entgegenzuwirken.

5. System nach einem vorhergehenden Anspruch, wobei der Sitzbezug (210) ferner dazu konfiguriert ist, mindestens eines von einer Rückenlehne (200), einer Kopfstütze, einer Sitzfläche, einer Armlehne, einer Beinstütze oder einem Rückseitenabschnitt des mindestens einen von dem Sitz, dem Sitzkissen oder dem Sitzgestell zu bedecken.

6. System nach einem vorhergehenden Anspruch, ferner eine Platte (400) umfassend, wobei die Platte über die Klettverschlussstruktur an dem Sitz, dem Sitzgestell, dem Sitzkissen oder einer Kabinenstruktur angebracht ist.

7. System nach einem vorhergehenden Anspruch, wobei das mindestens eine von dem Sitz, dem Sitzkissen oder dem Sitzgestell zur Verwendung in einem Luftfahrzeug bestimmt ist.

8. Verfahren zum Anbringen von Passagiersitzverkleidungen in einem Luftfahrzeug, Folgendes umfassend:
Bereitstellen mindestens eines von einem Sitz, einem Sitzkissen oder einem Sitzgestell;
Bereitstellen eines Sitzbezugs (210);
Bereitstellen eines ersten Teils (112) einer Klettverschlussstruktur (100), der an dem mindestens einen von dem Sitz, dem Sitzkissen oder dem Sitzgestell angebracht ist
Bereitstellen eines zweiten Teils (124) der Klettverschlussstruktur, der an der inneren Oberfläche des Sitzbezugs angebracht ist;
Bereitstellen einer Grenzfläche zwischen dem ersten Teil der Klettverschlussstruktur und dem zweiten Teil der Klettverschlussstruktur, wobei ein Abschnitt der Grenzfläche dazu konfiguriert ist, ein Gleiten des ersten Teils der Klettverschlussstruktur gegen den zweiten Teil des Klettverschlusses in einer ersten Richtung einzuschränken, während ein Gleiten des ersten Teils der Klettverschlussstruktur gegen den zweiten Teil der Klettverschlussstruktur in einer zweiten Richtung ermöglicht wird; und
mindestens eines von Gleiten oder Positionieren des Sitzbezugs über das mindestens eine von dem Sitz, dem Sitzkissen oder dem Sitzgestell; und **dadurch gekennzeichnet, dass** der erste Teil einer Klettverschlussstruktur ferner mindestens eines von einer Farbe, einer Zahl, einem Buchstaben oder einem Symbol umfasst, das eine Ausrichtung der Vielzahl von Haken angibt.

9. Verfahren nach Anspruch 8, wobei der erste Teil der Klettverschlussstruktur eine Vielzahl von Haken (104) umfasst, die dazu konfiguriert ist, in einer einzigen Richtung ausgerichtet zu sein, wobei der zweite Teil der Klettverschlussstruktur eine Vielzahl von Schlaufen (116) umfasst, wobei ein Abschnitt der Vielzahl von Schlaufen dazu konfiguriert ist, an mindestens einem Abschnitt der Vielzahl von Haken angebracht zu werden.

10. System nach Anspruch 8, wobei der erste Teil der Klettverschlussstruktur eine Vielzahl von Schlaufen umfasst, wobei mindestens ein Abschnitt der Vielzahl von Schlaufen dazu konfiguriert ist, an mindestens einem Abschnitt der Vielzahl von Haken angebracht zu werden, wobei der zweite Teil des Klettverschlusses eine Vielzahl von Haken umfasst, die dazu konfiguriert ist, sich in einer einzigen Richtung auszurichten.

11. Verfahren nach Anspruch 8, wobei eine Ausrichtung der Vielzahl von Haken ferner dazu konfiguriert ist, das Gleiten des Sitzbezugs auf das mindestens eine von dem Sitz, dem Sitzkissen oder dem Sitzgestell zu ermöglichen und dem Gleiten des Sitzbezugs von dem mindestens einen von dem Sitz, dem Sitzpolster oder dem Sitzgestell entgegenzuwirken.

12. Verfahren nach Anspruch 8, wobei der Sitzbezug ferner dazu konfiguriert ist, mindestens eines von einer Rückenlehne, einer Kopfstütze, einer Sitzfläche, einer Armlehne, einer Beinstütze oder einem Rückseitenabschnitt des mindestens einen von dem Sitz, dem Sitzkissen oder dem Sitzgestell zu bedecken.

13. Verfahren nach Anspruch 8, ferner umfassend mindestens eines von Anpassen des Sitzbezugs oder Drücken des Sitzbezugs gegen das mindestens eine von dem Sitz, dem Sitzkissen oder dem Sitzgestell.

## Revendications

1. Système de fixation de housses de siège passager, comprenant :
une housse de siège (210) ;
au moins un parmi un siège, un coussin de siège ou un cadre de siège ; et
une structure de fixation à boucles et crochets (100), comprenant :
une première partie (112) de la structure de fixation à boucles et crochets fixée à l'au moins un parmi le siège, le coussin de siège ou le cadre de siège ;
une seconde partie (124) de la structure de fixation à boucles et crochets fixée à la surface intérieure de la housse de siège ; et
une interface entre la première partie de la structure de fixation à crochets et boucles et la seconde partie de la structure de fixation à crochets et boucles, dans lequel une partie de l'interface est configurée pour restreindre le glissement de la première partie de la structure de fixation à crochets et boucles contre la seconde partie de la structure de fixation à crochets et boucles dans une première direction, tout en permettant le glissement de la première partie de la structure de fixation à crochets et boucles contre la seconde partie de la structure de fixation à crochets et boucles dans une seconde direction ; et **caractérisé en ce que** la première partie de la structure de fixation à crochets et boucles comprend en outre au moins un parmi une couleur, un chiffre, une lettre ou un symbole indiquant un alignement de la pluralité de crochets.

2. Système selon la revendication 1, dans lequel la première partie de la structure de fixation à crochets et boucles comprend en outre une pluralité de crochets (104) configurés pour s'aligner dans une seule direction, dans lequel la seconde partie de la structure de fixation à crochets et boucles comprend en outre une pluralité de boucles (116), dans lequel une partie de la pluralité de boucles est configurée pour se fixer à au moins une partie de la pluralité de crochets.

3. Système selon la revendication 1, dans lequel la seconde partie de la structure de fixation à crochets et boucles comprend en outre une pluralité de crochets (104) configurés pour s'aligner dans une seule direction, dans lequel la première partie de la structure de fixation à crochets et boucles comprend en outre une pluralité de boucles, dans lequel une partie de la pluralité de boucles est configurée pour se fixer à au moins une partie de la pluralité de crochets.

4. Système selon une quelconque revendication précédente, dans lequel un alignement de la pluralité de crochets (104) est en outre configuré pour permettre le glissement de la housse de siège sur au moins l'un parmi le siège, le coussin de siège ou le cadre de siège et résister au glissement de la housse de siège hors de l'au moins un parmi le siège, le coussin de siège ou le cadre de siège.

5. Système selon une quelconque revendication précédente, dans lequel la housse de siège (210) est en outre configurée pour recouvrir au moins l'un d'un dossier (200), d'un appui-tête, d'une base de siège, d'un accoudoir, d'un repose-jambes ou d'une partie arrière de l'au moins un parmi le siège, le coussin de siège ou le cadre de siège.

6. Système selon une quelconque revendication précédente, comprenant en outre un panneau (400), dans lequel le panneau se fixe via la structure de fixation à crochets et boucles au siège, au cadre de siège, au coussin de siège ou à une structure de cabine.

7. Système selon une quelconque revendication précédente, dans lequel l'au moins parmi le siège, le coussin de siège ou le cadre de siège est destiné à être utilisé dans un aéronef.

8. Procédé de fixation de housses de siège passager dans un aéronef, comprenant :
la fourniture d'au moins un parmi un siège, un coussin de siège ou un cadre de siège ;
la fourniture d'une housse de siège (210) ;
la fourniture d'une première partie (112) d'une structure de fixation à boucles et crochets (100) fixée à l'au moins un parmi le siège, le coussin de siège ou le cadre de siège ;
la fourniture d'une seconde partie (124) de la structure de fixation à boucles et crochets fixée à la surface intérieure de la housse de siège ;
la fourniture d'une interface entre la première partie de la structure de fixation à crochets et boucles et la seconde partie de la structure de fixation à crochets et boucles, dans lequel une partie de l'interface est configurée pour restreindre le glissement de la première partie de la structure de fixation à crochets et boucles contre la seconde partie du dispositif de fixation à crochets et boucles dans une première direction, tout en permettant le glissement de la première partie de la structure de fixation à crochets et boucles contre la seconde partie de la structure de fixation à crochets et boucles dans une seconde direction ; et
et au moins un parmi le glissement ou le positionnement de la housse de siège sur l'au moins un parmi le siège, le coussin de siège ou le cadre de siège ; et **caractérisé en ce que** la première partie de la structure de fixation à crochets et boucles comprend en outre au moins un parmi une couleur, un chiffre, une lettre ou un symbole indiquant un alignement de la pluralité de crochets.

9. Procédé selon la revendication 8, dans lequel la première partie de la structure de fixation à crochets et boucles comprend une pluralité de crochets (104) configurés pour s'aligner dans une seule direction, dans lequel la seconde partie de la structure de fixation à crochets et boucles comprend une pluralité de boucles (116), dans lequel une partie de la pluralité de boucles est configurée pour se fixer à au moins une partie de la pluralité de crochets.

10. Système selon la revendication 8, dans lequel la première partie de la structure de fixation à crochets et boucles comprend une pluralité de boucles, dans lequel au moins une partie de la pluralité de boucles est configurée pour se fixer à l'au moins une partie de la pluralité de crochets, dans la seconde partie du dispositif de fixation à crochets et boucles comprend une pluralité de crochets configurés pour s'aligner dans une seule direction.

11. Procédé selon la revendication 8, dans lequel un alignement de la pluralité de crochets est en outre configuré pour permettre le glissement de la housse de siège sur au moins l'un parmi le siège, le coussin de siège ou le cadre de siège et résister au glissement de la housse de siège hors de l'au moins un parmi le siège, le coussin de siège ou le cadre de siège.

12. Procédé selon la revendication 8, dans lequel la housse de siège est en outre configurée pour recouvrir au moins l'un d'un dossier, d'un appui-tête, d'une base de siège, d'un accoudoir, d'un repose-jambes ou d'une partie arrière de l'au moins un parmi le siège, le coussin de siège ou le cadre de siège.

13. Procédé selon la revendication 8, comprenant en outre au moins l'un parmi l'ajustement de la housse de siège ou la pression de la housse de siège contre au moins l'un parmi le siège, le coussin de siège ou le cadre de siège.
